# DEMANDE DE BREVET EUROPEEN

(11) **EP 3 270 052 A1**
(43) Date de publication de la demande: **17.01.2018**
(21) Numéro de dépôt: 17179552.9
(22) Date de dépôt: 04.07.2017
(51) Int. Cl.: F21V 19/00, F21Y 115/15

(54) **SUPPORT D'UN MOYEN LUMINEUX POUR VÉHICULE AUTOMOBILE**

(30) Priorité: 07.07.2016 FR 1656528
(71) Demandeur: Valeo Iluminacion, 23600 Martos (ES)
(72) Inventeur: RUBIA, Juan-Antonio, 23600 Martos (ES); RODRIGUEZ, Leandro, 23600 Martos (ES); SANCHEZ, Ramon, 23600 Martos (ES); MORENO, Juan-Francisco, 23600 Martos (ES); CABANNE, Damien, 23600 Martos (ES); FERNANDEZ, Ricardo, 23600 Martos (ES); MOISY, Eric, 23600 Martos (ES)
(74) Mandataire: Oggioni, Baptiste

(57) **Abrégé**

Un support d'au moins un moyen lumineux pour véhicule automobile comporte une base (8) de fixation à un élément de structure du véhicule et au moins un module de support (10) configuré pour former un logement de réception dudit moyen lumineux (6).

Au moins une partie dudit module de support (10) est réalisé en un matériau transparent ou translucide.

## Description

Le domaine de la présente invention est celui des dispositifs d'éclairage et/ou de signalisation pour véhicules automobiles, et la présente invention se rapporte plus particulièrement aux dispositifs lumineux qui mettent en oeuvre au moins une diode électroluminescente organique.

Les dispositifs lumineux de véhicule automobile doivent répondre d'une part à des critères fonctionnels, comme la puissance lumineuse et l'agencement spécifique pour la réalisation d'un faisceau déterminé et règlementaire, ou encore une durée de vie élevée, un faible encombrement, une facilité de mise en oeuvre, et ils doivent d'autre part répondre à des conditions esthétiques imposées par les constructeurs automobiles pour une identification visuelle de leur véhicule.

L'utilisation de sources lumineuses mettant en oeuvre une ou plusieurs diodes électroluminescentes est devenu fréquente.

On assiste plus récemment à l'utilisation de diodes électroluminescentes organiques, également désignées dans ce qui suit par son acronyme anglo-saxon OLED (Organic Light Emitting Diode), est classiquement composée de deux électrodes (une anode et une cathode) entre lesquelles sont placées au moins une couche d'émission, réalisée dans un matériau électroluminescent, ainsi qu'un ensemble de couches de transport électronique, couche d'émission et couches de transport électronique étant toutes réalisées dans des matériaux organiques. Afin d'exciter les couches de transport et dans la couche d'émission et obtenir l'électroluminescence du matériau constituant ladite couche d'émission, on doit appliquer une tension électrique entre les deux électrodes.

Bien que la puissance lumineuse émise par une source de type diode OLED reste inférieure à celle émise par une source à diodes électroluminescentes non organiques (ou LEDs, pour Light Emitting Diode), de telles sources sont de plus en plus utilisées dans le domaine automobile, tant pour l'éclairage ou la signalisation du véhicule à proprement parler que pour des raisons esthétiques, et notamment de signature visuelle et lumineuse du véhicule.

Une source de lumière de type diode OLED pour véhicule automobile se compose généralement d'une partie émissive agencée en regard d'une glace de fermeture d'un projecteur et d'une partie de connexion par laquelle ce module lumineux est connecté à un dispositif d'alimentation électrique et de pilotage du dispositif d'éclairage et/ou de signalisation du véhicule. La partie de connexion est montée dans un support dont s'étend en saillie la partie émissive.

La présente invention concerne un support d'au moins un moyen lumineux pour véhicule automobile, ledit support comprenant une base de fixation à un élément de structure du véhicule et au moins un module de support configuré pour former un logement de réception dudit moyen lumineux. Selon l'invention, au moins une partie dudit module de support est réalisé en un matériau transparent ou translucide.

Notamment, cette partie du module de support peut être destinée à être visible depuis l'extérieur du véhicule lorsque le support est fixé à l'élément de structure.

Dès lors, aussi bien lorsque le moyen lumineux est allumé ou éteint, la partie émissive peut donner l'impression d'être suspendue au support, ce qui offre des perspectives de design intéressantes. On peut ainsi rendre ces arrangements de sources lumineuses encore plus attrayants, notamment en augmentant l'impression que les sources de lumière flottent dans le module lumineux associé.

On comprend que selon l'invention, le moyen lumineux peut être un moyen d'éclairage de la route, un moyen de signalisation du véhicule ou un moyen d'éclairage de l'intérieur du véhicule.

On peut prévoir que le support comprenne le moyen lumineux.

Dans un mode de réalisation particulier, le module de support comporte une paroi de fond contre laquelle est susceptible d'être plaquée ledit moyen lumineux et qui est bordée par un cadre de maintien, au moins ledit cadre de maintien étant réalisé en un matériau transparent ou translucide.

Selon différentes caractéristiques de l'invention, prises seules ou en combinaison, on pourra prévoir que :
- le cadre de maintien comporte au moins des butées prolongeant sensiblement perpendiculairement la paroi de fond ; le cadre de maintien prolonge sensiblement perpendiculairement la paroi de fond en définissant de la sorte un logement apte à recevoir la partie de connexion ;
- le cadre de maintien comprend un ensemble de premières parois latérales agencées parallèlement sur les petits côtés de la paroi de fond et deux butées prolongeant sensiblement perpendiculairement une extrémité des parois latérales en rapprochement l'une de l'autre, de manière à rétrécir le passage entre les premières parois latérales ;
- les butées coopèrent avec les bords d'épaulement de la partie de connexion de la diode électroluminescente organique ;
- la paroi de fond est prolongée par une patte de soutien qui s'étend dans le plan de la paroi de fond au-delà des butées ;
- la paroi de fond présente un pion configuré comme moyen d'indexage dudit moyen lumineux ; le pion s'étend en saillie de la paroi de fond du moyen de support ;
- le pion est réalisé en un matériau transparent ou translucide, et avantageusement le même matériau que celui utilisé pour réaliser le cadre de maintien s'étendant en saillie de la paroi de fond du module de support ;
- la paroi de fond du module de support comporte des plots conducteurs configurés pour être connectés à une partie métallique du moyen lumineux ;
- la paroi de fond comporte une couche adhésive configurée pour maintenir en position le moyen lumineux ;
- la couche adhésive intègre des moyens métalliques formant lesdits plots conducteurs ;
- la paroi de fond peut comprendre, alternativement ou cumulativement à ce qui vient d'être présenté, au moins un moyen élastiquement déformable agencé pour maintenir en position le moyen lumineux ; à titre d'exemple non limitatif, on pourra prévoir d'équiper la paroi de fond d'une patte élastique, ou d'un ressort ; ce moyen élastique peut être réalisé en un matériau électriquement conducteur de manière à pouvoir être connecté à une partie métallique du moyen lumineux ; en variante, on pourra prévoir des vis et une contrepartie venant plaquer le moyen lumineux sur la paroi de fond ;
- le matériau transparent ou translucide est du poylcarbonate ou du polyméthacrylate de méthyle ;
- le module de support prolonge sensiblement perpendiculairement la base de fixation à l'élément de structure.

Selon une autre série de caractéristiques de l'invention, prises seules ou en combinaison, on pourra prévoir que :
- le support est configuré de sorte que, lorsque les diodes électroluminescentes organiques sont en place dans leur module de support respectif, la base est cachée par le corps des diodes ;
- la partie émissive de la diode électroluminescente organique peut comporter une ou plusieurs surfaces éclairantes distinctes ;

L'invention concerne également un dispositif lumineux de véhicule automobile, comportant au moins un module de support d'un moyen lumineux tel que présenté précédemment. Le moyen lumineux comporte une partie émissive et une partie de connexion et le dispositif est agencé de sorte que la partie de connexion est fixée dans un logement du module de support tandis que la partie émissive s'étend en saillie du module de support. Dans ce contexte, la partie transparente ou translucide du module de support entoure la partie de connexion du moyen d'éclairage et/ou de signalisation.

Avantageusement, le moyen lumineux est une diode électroluminescente organique. Cette diode peut notamment être une diode flexible.

Le moyen lumineux peut comporter un alésage configuré pour être en prise autour d'un pion s'étendant en saillie de la paroi de fond du module de support, le pion étant réalisé en matériau transparent ou translucide.

D'autres caractéristiques et avantages de la présente invention apparaitront plus clairement à l'aide de la description et des dessins parmi lesquels :
- la figure 1 est une vue en perspective d'un support selon un premier mode de réalisation de l'invention, configuré pour recevoir une pluralité de diodes électroluminescentes organiques (OLED) ;
- la figure 2 est une vue en perspective d'un détail du support de la figure 1, dans une représentation éclatée de la diode et du support ;
- la figure 3 est une vue similaire à celle de la figure 2, dans laquelle la diode et le support sont encastrés ; et
- la figure 4 est une vue en perspective d'une variante de réalisation du support selon l'invention.

Il faut tout d'abord noter que si les figures exposent l'invention de manière détaillée pour sa mise en oeuvre, lesdites figures peuvent bien entendu servir à mieux définir l'invention le cas échéant.

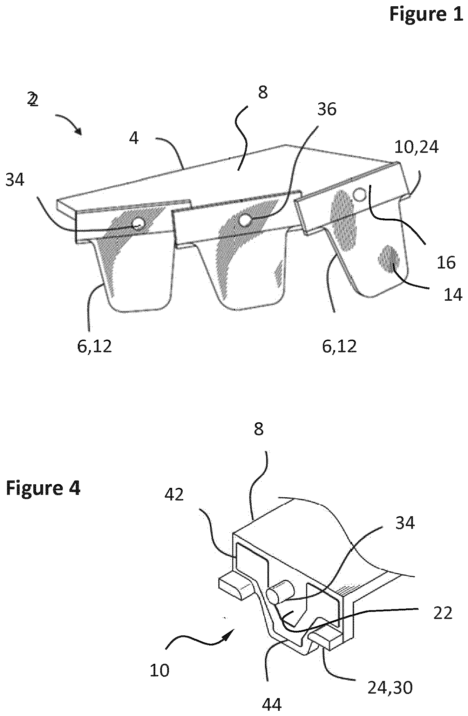

Sur la figure 1, un dispositif d'éclairage et/ou de signalisation 2 comporte un support 4 commun à une pluralité, ici trois, de moyens d'éclairage et/ou de signalisation 6.

Ce dispositif d'éclairage et/ou de signalisation peut être appliqué dans un projecteur avant ou un feu arrière du véhicule. On comprendra que d'autres applications peuvent être prévues, notamment pour des dispositifs d'éclairage et/ou de signalisation intérieur. Par ailleurs, les moyens d'éclairage sont ici agencés de manière à s'étendre sensiblement verticalement, et en série horizontale, mais on comprendra que d'autres orientations pourraient être envisagées sans sortir du contexte de l'invention.

Le support commun 4 comporte une base 8, présentant la forme d'une plaque, et une pluralité de modules de support 10, configurés pour recevoir respectivement une diode électroluminescente organique 12, et prolongeant sensiblement perpendiculairement la base, étant entendu qu'un angle d'inclinaison entre la base et les modules de support pourrait être défini.

Selon différentes variantes, la base 8 et les modules de support 10 peuvent être réalisés indépendamment et fixés ensemble par la suite, ou bien être formés d'un seul tenant, en une pièce monobloc, étant noté que par monobloc, on entend que la plaque et l'élément de support ne peuvent être séparés sans que l'un et/ou l'autre ne soit détérioré.

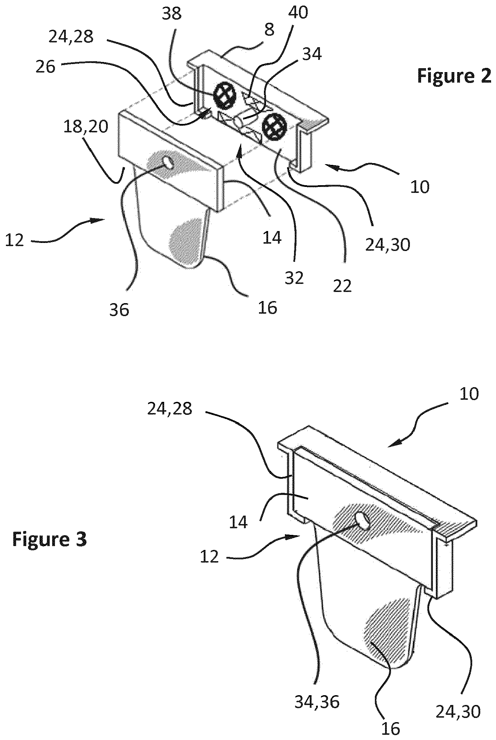

On comprendra que chaque module de support pourrait être indépendant des autres modules de support, et l'on décrira par la suite un unique module de support en référence aux figures 2 à 4.

La base 8 est configurée pour être fixée à la structure du véhicule automobile, et éventuellement pour porter des moyens de commande des moyens d'éclairage et/ou de signalisation. Lorsque les diodes électroluminescentes organiques 12 sont en place dans leur module de support respectif 10, il est notable que la base 8 est cachée par le corps des diodes 12.

La diode électroluminescente organique 12, ou diode OLED, comporte une partie émissive 14, et une partie de connexion 16 destinée à permettre le raccordement électrique de la partie émissive avec un dispositif d'alimentation électrique et/ou de pilotage de l'ensemble de signalisation et/ou d'éclairage du véhicule, ici non représenté. La partie émissive 14 est classiquement composée d'un ensemble de couches polymères prises en sandwich entre une anode et une cathode, et elle peut présenter, compte tenu de la nature des matériaux qui la composent, une certaine souplesse mécanique. Selon différents modes de réalisation, la partie émissive 14 de la diode OLED peut comporter une ou plusieurs surfaces éclairantes distinctes. La partie de connexion 16 est réalisée dans un matériau isolant, mécaniquement plus rigide, et par exemple, et de manière non limitative, un verre ou une résine polymère. Selon le mode de réalisation plus particulièrement illustré sur les figures, elle se présente sous la forme d'une plaque sensiblement parallélépipédique à partir d'un des grands côtés de laquelle s'étend la partie émissive 14 de la diode OLED. De manière plus détaillée, en se référant à la figure 2 notamment, la partie émissive 14 de la diode OLED prolonge sensiblement dans un même plan la partie de connexion 16 depuis un premier grand côté 18 de la plaque formant ladite partie de connexion, sensiblement au centre de ce premier grand côté de sorte que des bords d'épaulement 20 sont agencés de part et d'autre de la partie émissive.

Le module de support 10, visible sur les figures 2 et 3 dans un premier mode de réalisation, comporte une paroi de fond 22 sous forme, selon le mode de réalisation illustré par les figures, d'une plaque sensiblement rectangulaire dont les dimensions sont sensiblement identiques à celles de la partie de connexion 16 de la diode OLED.

Le module de support 10 comporte en outre un cadre de maintien 24 venant border au moins partiellement la paroi de fond 22. Ce cadre de maintien 24 prolonge sensiblement perpendiculairement la paroi de fond 22 en définissant de la sorte un logement 26 apte à recevoir la partie de connexion 16. On comprend que le cadre de maintien 24 permet de maintenir la plaque formant partie de connexion 16 de la diode OLED à l'intérieur du logement 26, pour éviter notamment que la diode OLED tombe sous l'effet de la gravité.

Selon le mode de réalisation plus particulièrement illustré sur les figures 2 et 3, ce cadre de maintien consiste en un ensemble de premières parois latérales 28 agencées parallèlement sur les petits côtés de la paroi de fond 22 et en deux butées 30 prolongeant sensiblement perpendiculairement une extrémité des parois latérales en rapprochement l'une de l'autre, de manière à rétrécir le passage entre les premières parois latérales.

Plus précisément, les moyens de maintien sont définis et agencés de telle manière que, lorsque la partie de connexion 16 de la diode OLED est accueillie contre la paroi de fond 22 dans le logement 26, les butées 30 forment une butée contre l'épaisseur du grand côté de la plaque formant ladite partie de connexion 16, tandis que les premières parois latérales 28 forment une butée contre l'épaisseur du petit côté de la plaque formant ladite partie de connexion 16.

L'ensemble des parois latérales et des butées définit ainsi une forme de cadre de maintien dans lequel la partie de connexion 16 de la diode OLED 12 est accueillie et maintenue, étant entendu qu'ici aucune paroi n'est nécessaire à l'opposé des butées 30 du fait de la disposition verticale des diodes électroluminescentes organiques 12.

Une ouverture 32 est définie entre les deux butées 30 pour laisser passage pour la diode OLED. Ainsi, dans la position assemblée visible notamment sur la figure 3, la partie de connexion 16 peut loger dans le logement du module de support tandis que la partie émissive 14 peut s'étendre en dehors du module de support pour participer à la fonction d'éclairage et/ou de signalisation. Les butées 30 coopèrent avec les bords d'épaulement 20 de la partie de connexion 16 de la diode OLED.

Le module de support 10 peut comporter également des éléments permettant de faciliter l'engagement et la mise en place de la plaque de connexion 16 de la diode OLED au sein du logement, et par exemple, tel qu'il est visible sur la figure 2, un pion 34 qui s'étend en saillie de la paroi de fond 22 pour pouvoir coopérer avec une forme complémentaire, ici un alésage 36, définie dans l'épaisseur de la plaque formant la partie de connexion 6.

Lorsque la partie de connexion 16 de la diode OLED est en place dans le module de support 10, il convient qu'un contact électrique soit réalisé entre ces deux éléments. Ceci s'opère notamment par la présence de plots conducteurs 38 rapportés sur la paroi de fond 22 formant partie du logement 26 de la partie de connexion 16. Dans l'exemple schématique illustré sur la figure 2, on a représenté deux premiers plots conducteurs 38 sous forme de pièces sensiblement circulaires, et des deuxièmes plots électriques de forme équivalente sont agencés sur la partie de connexion de manière à ce que, lorsque la diode OLED est montée sur le module de support, ces différents connecteurs électriques soient disposés les uns contre les autres.

On comprend que ces premiers plots conducteurs 38 sont raccordés par des pistes électriques, ici non représentées, à un connecteur apte à coopérer avec un connecteur complémentaire du dispositif électrique du véhicule pour réaliser la connexion électrique de ce dernier à un dispositif d'alimentation électrique et/ou de pilotage de l'ensemble d'éclairage et/ou de signalisation du véhicule.

Afin d'assurer le contact électrique entre les premiers 38 et deuxièmes plots conducteurs, il convient de plaquer la diode et sa partie de connexion 16 contre la paroi de fond du module de support, et il est nécessaire de maintenir cette position. Les moyens de maintien décrits précédemment permettent d'éviter le mouvement de la diode dans les directions perpendiculaires à la direction selon laquelle la partie de connexion est plaquée contre la paroi de fond, et on prévoit un moyen de fixation complémentaire pour éviter le mouvement de la diode dans une direction opposée à la direction selon laquelle la partie de connexion est plaquée contre la paroi de fond.

Ces moyens de fixation complémentaires peuvent avantageusement prendre la forme d'une zone de collage agencée entre la paroi de fond et la face en regard de la partie de connexion de la diode. On peut prévoir une zone de collage 40 distincte des premiers plots conducteurs 38, tel que cela est illustré sur la figure 2.

Dans une variante non représentée, ces moyens de fixation complémentaires pourront consister en un capot de protection venant en recouvrement du logement lorsque la partie de connexion de la diode OLED y est logée. Dans ce cas, les plots conducteurs pourraient être réalisés sur une face intérieure du capot, au lieu d'être prévus sur la paroi de fond du module de support.

Selon l'invention, il est notable qu'au moins une partie du module de support 10 est réalisée en un matériau transparent ou translucide, et que cette partie transparente ou translucide est choisie parmi les éléments non recouverts par la diode OLED lorsque celle-ci est supportée par le module de support.

Notamment, dans le mode de réalisation illustré sur la figure 1, les premières parois latérales 28 et les butées 30 qui les prolongent, qui forment le cadre de maintien de la diode dans le module de support, sont chacune réalisées en un matériau transparent ou translucide, de sorte que ce cadre de maintien ne soit pas visible, aussi bien lorsque la diode est allumée ou éteinte, afin que l'observateur extérieur ait l'impression visuelle que la diode flotte sans être tenue par un moyen support.

On comprend que le module de support 10 peut être intégralement formé par un matériau transparent ou translucide, ou bien, dans un mode de réalisation avantageux en terme de coût des matériaux, qu'il soit formé par deux matériaux distincts. Dans ce cas, on saura appliquer d'une part un matériau opaque standard pour l'ensemble des parties du module de support caché par la diode lorsque celle-ci est logée dans le module de support, et notamment la paroi de fond du logement ou la base du module de support, et d'autre part le matériau transparent ou translucide pour les parties dégagées, et notamment les parois et butées formant le cadre de maintien et le pion servant à l'indexage de la partie de connexion de la diode. On pourra également choisir deux matériaux au degré de transparence différent d'une partie à l'autre du module de support, avec un premier matériau translucide et un deuxième matériau transparent.

Le matériau transparent ou translucide peut à titre d'exemple consister en du polycarbonate (PC) ou du polyméthacrylate de méthyle (PMMA), étant entendu que ce choix n'est pas exhaustif et limitatif, dès lors que le matériau choisi présente à la fois un caractère transparent ou translucide et des propriétés de rigidité suffisantes au maintien et/ou à l'indexage de la partie de connexion dans le module de support.

Sur la figure 3, on a illustré la position assemblée dans laquelle la partie de connexion 16 de la diode est plaquée contre la paroi de fond 22 du logement 26 correspondant. Un observateur extérieur, représenté schématiquement sur cette figure, est susceptible de voir, lorsque la diode n'est pas allumée, à la fois l'ensemble de la diode OLED 12, le cadre de maintien du module de support agencé autour de la diode et le pion d'indexage disposé au centre de la partie de connexion de la diode. L'invention présente l'avantage de rendre transparents ou translucides l'ensemble des éléments susceptibles d'être vus par l'observateur extérieur, autres que la diode OLED.

On va maintenant décrire un deuxième mode de réalisation, en se référant à la figure 4, d'un module de support apte à recevoir une diode OLED et comportant au moins une partie transparente ou translucide. Là encore, le cadre de maintien de la diode est réalisé en un matériau transparent ou translucide.

Le module de support de ce deuxième mode de réalisation diffère notamment de ce qui a été précédemment décrit en ce que le cadre de maintien s'étendant en saillie de la paroi de fond 22 se limite à la présence des butées 30. Seules ces butées sont alors à prévoir en matériau transparent ou translucide pour rendre invisible ou quasi-invisible l'ensemble des éléments agencés autour de la diode lorsque celle-ci est plaquée dans le logement du module de support.

Aucune première paroi latérale n'est prévue sur les petits côtés de la paroi de fond, de sorte que le nombre d'éléments à rendre transparent ou translucide est limité, ce qui peut permettre de limiter les coûts.

Dans ce contexte, afin d'assurer le maintien en position de la partie de connexion dans le logement, on prévoit une zone de collage 40 élargie et l'on utilise une colle conductrice, c'est-à-dire chargée de matériaux métalliques, afin de réaliser dans une même zone la fonction de collage et la fonction de plot conducteur.

La colle pourrait être remplacée par n'importe quelle couche adhésive, étant entendu qu'il est avantageux dans le contexte de la présente invention que la partie de connexion de la diode soit fixée dans le logement du module de support sans moyens de fixation apparents, et par exemple des vis de fixation, qui atténueraient l'effet visuel selon lequel la diode semble flotter sans être tenue par le module de support.

Par ailleurs, le module de support dans ce deuxième mode de réalisation comporte une paroi de fond prolongée par une patte de soutien 44, contre laquelle vient porter la partie émissive de la diode OLED lorsque celle-ci est en place dans le module de support. La patte de soutien 44 s'étend dans le plan de la paroi de fond 22 au-delà des butées 30 formant le cadre de maintien autour de la paroi de fond. On définit ainsi une paroi permettant de réduire la surface en porte à faux de la diode ce qui permet de limiter les vibrations de la diode lors du roulage du véhicule.

Dans chacun de ces modes de réalisation, l'invention atteint ainsi son but, en proposant un module lumineux qui met en oeuvre au moins une diode électroluminescente organique dont le maintien en position par un module de support permet de générer un effet visuel selon lequel cette diode est flottante, sans support mécanique visible, par la mise en oeuvre de tout ou partie du module de support en matériau transparent ou translucide.

Il est toutefois à noter que l'invention ne saurait se réduire aux moyens et configurations décrits et illustrés, mais qu'elle s'applique également à tous moyens ou configurations équivalents et à toute combinaison de tels moyens. A titre d'exemple, les formes de la plaque formant partie de connexion de la diode OLED et du module de support décrites ici sont indicatives, et l'invention s'étend également à toute autre forme de partie de connexion et de support, dès lors que le module de support présente des parois formant butée au positionnement de la diode et que ces butées de positionnement sont réalisées dans un matériau translucide ou transparent.

## Revendications

1. Support d'au moins un moyen lumineux pour véhicule automobile, ledit support comprenant une base (8) de fixation à un élément de structure du véhicule et au moins un module de support (10) configuré pour former un logement de réception dudit moyen lumineux (6), **caractérisé en ce qu'**au moins une partie dudit module de support (10) est réalisé en un matériau transparent ou translucide.

2. Support selon la revendication 1, **caractérisé en ce que** le module de support (10) comporte une paroi de fond (22) contre laquelle est susceptible d'être plaquée ledit moyen lumineux (6) et qui est bordée par un cadre de maintien (24), au moins ledit cadre de maintien étant réalisé en un matériau transparent ou translucide.

3. Support selon la revendication 2, **caractérisé en ce que** le cadre de maintien (24) comporte au moins des butées (30) prolongeant sensiblement perpendiculairement la paroi de fond (22).

4. Support selon la revendication précédente, **caractérisé en ce que** la paroi de fond (22) est prolongée par une patte de soutien (44) qui s'étend dans le plan de la paroi de fond au-delà des butées (30).

5. Support selon l'une des revendications précédentes, **caractérisé en ce que** la paroi de fond (22) présente un pion (34) configuré comme moyen d'indexage dudit moyen lumineux (6).

6. Support selon la revendication précédente, **caractérisé en ce que** le pion (34) est réalisé en un matériau transparent ou translucide.

7. Support selon l'une des revendications précédentes, **caractérisé en ce que** la paroi de fond (22) du module de support (10) comporte des plots conducteurs (38) configurés pour être connectés à une partie métallique du moyen lumineux (6).

8. Support selon la revendication précédente, **caractérisé en ce que** la paroi de fond (22) comporte en outre une couche adhésive (40) configurée pour maintenir en position le moyen lumineux (6).

9. Support selon la revendication précédente, **caractérisé en ce que** la couche adhésive (40) intègre des moyens métalliques formant lesdits plots conducteurs (38).

10. Support selon l'une des revendications précédentes, **caractérisé en ce que** ledit matériau transparent ou translucide est du poylcarbonate (PC) ou du polyméthacrylate de méthyle (PMMA).

11. Support selon l'une des revendications précédentes, **caractérisé en ce que** le module de support (10) prolonge sensiblement perpendiculairement la base (8) de fixation à l'élément de structure.

12. Dispositif lumineux de véhicule automobile, comportant au moins un module de support (10) d'un moyen lumineux (6) selon l'une quelconque des revendications précédentes.

13. Dispositif lumineux selon la revendication précédente, dans lequel ledit moyen lumineux comprend une partie émissive (14) et une partie de connexion (16) de sorte que la partie de connexion est fixée dans un logement (26) du module de support tandis que la partie émissive s'étend en saillie du module de support, **caractérisé en ce que** la partie transparente ou translucide du module de support entoure la partie de connexion (16) du moyen d'éclairage lumineux.

14. Dispositif selon l'une des revendications 12 ou 13, **caractérisé en ce que** le moyen lumineux (6) est une diode électroluminescente organique (12).

15. Dispositif selon l'une des revendications 12 à 14, lorsque le support est conforme au moins à la revendication 5, **caractérisé en ce que** le moyen lumineux (6) comporte un alésage (36) configuré pour être en prise autour dudit pion (34), ledit pion étant réalisé en matériau transparent ou translucide.
